# EUROPÄISCHE PATENTSCHRIFT

(11) **EP 3 163 591 B1**
(45) Veröffentlichungstag und Bekanntmachung des Hinweises auf die Patenterteilung: **28.02.2018**
(21) Anmeldenummer: 16001799.2
(22) Anmeldetag: 16.08.2016
(51) Int. Cl.: H01F 41/02, B05D 1/06

(54) **VERFAHREN UND VORRICHTUNG ZUR HERSTELLUNG VON PERMANENTMAGNETEN**
METHOD AND APPARATUS FOR PRODUCING PERMANENT MAGNETS
PROCEDE ET DISPOSITIF DE FABRICATION D'AIMANTS PERMANENTS

(30) Priorität: 29.10.2015 DE 102015013950
(43) Veröffentlichungstag der Anmeldung: 03.05.2017
(73) Patentinhaber: WILO SE, 44263 Dortmund (DE)
(72) Erfinder: KRENGEL, Martin, 44269 Dortmund (DE); WEBER, Hermann, 58313 Herdecke (DE)
(74) Vertreter: Cohausz Hannig Borkowski Wißgott

(56) Entgegenhaltungen:
- EP-A1- 0 513 891
- GB-A- 2 235 700
- JP-A- H05 135 924
- JP-A- S62 213 207
- JP-A- 2000 012 359
- US-A- 5 682 591

## Beschreibung

Die Erfindung betrifft ein Verfahren zur Herstellung eines Permanentmagneten aus einem Pulverpressling aus mechanisch vorverdichtetem Magnetpulver durch Heißpressen in einer Pressform, bei dem der Pulverpressling und/oder die Pressform vor dem Heißpressen mit einem Formtrennmittel beschichtet wird, um ein Anhaften des Pulverpresslings an der Pressform zu verhindern. Die Erfindung betrifft ferner eine Vorrichtung, umfassend ein beheizbares Formwerkzeug in dem eine Pressform zur Aufnahme des Pulverpresslings ausgebildet ist, sowie einen Pressstempel zum Heißpressen des Pulverpresslings in der Pressform zu einem Rohmagneten, wobei sich bestimmungsgemäß während des Heißpressens zwischen dem Pulverpressling und der Pressform ein Formtrennmittel befindet, um ein Anhaften des Pulverpresslings an der Pressform zu verhindern.

Permanentmagnete werden üblicherweise aus einem seltene Erden enthaltenden kristallinen Pulver hergestellt, das zunächst bei Raumtemperatur in eine Form gepresst und dadurch verdichtet wird. Das pulverförmiges Permanentmagnetmaterial wird typischerweise durch ein Schmelzspinnverfahren hergestellt, wobei das resultierende Magnetpulver sehr kleine Korngrößen von durchschnittlich weniger als einige 100nm aufweist. Die durch das Verdichten entstehenden Presslinge besitzen eine kompakte Struktur, meist in der Form eines Quaders, und können daher als transportable Einheit gut verarbeitet und gehandhabt werden. Dennoch sind sie porös und zerbröckeln bei der Einwirkung einer äußeren mechanischen Kraft.

Die Pulverpresslinge werden anschließend gesintert, d.h. in einer erhitzten Pressform heißgepresst zu einem Rohmagneten. Typischerweise werden die Temperatur und der Druck beim Heißpressen so gewählt, dass die Oberflächen der Pulverpartikel aufschmelzen und sich stofflich verbinden, ohne dass eine vollständige Schmelzung der Pulverpartikel erfolgt. Infolge des Drucks wird die Schmelze in die Poren des Pulverpresslings gedrückt, so dass das Volumen des Rohmagneten kleiner als das Volumen des im Ausgangszustand vorliegenden Pulverpresslings ist. Durch das Heißpressen wird erreicht, dass der Pulverpressling eine konsolidierte, kompakte Form aufweist, wobei die magnetischen Eigenschaften des Ausgangsmaterials beibehalten bleiben.

Das Verdichten kann in Gegenwart eines starken Magnetfelds erfolgen, in dem sich die magnetischen Momente der Kristalle ausrichten. Durch das Sintern bzw. Heißpressen, bei dem Temperaturen zwischen 800°C und 1100°C erreicht werden, geht jedoch die Magnetisierung verloren und muss deshalb wiederhergestellt werden, in dem der Rohmagnet erneut einem starken Magnetfeld ausgesetzt wird.

Die hohe Temperatur bei gleichzeitig hohen Drücken von mehr 50 MPa macht es notwendig, den Pulverpressling beim Heißpressverfahren von der Pressform stofflich zu trennen, um ein Verbacken zwischen Pulverpressling und Pressform zu vermeiden. Ein derartiges Verbacken würde dazu führen, dass der heißgepresste Pulverpressling nur schwer aus der Pressform entfernt werden kann und zudem erhebliche Fehlstellen in Form von Rissen und/ oder Ausbuchtungen aufweist. Ferner blieben Teile des Magnetpulvers an der Pressform haften, so dass diese nach einigen Pressvorgängen aufgrund der sich sammelnden Pulververbackungen nicht mehr zu Gebrauchen wäre.

Zur Vermeidung eines solchen Verbackens und Erleichterung des Entformens wird bei der Herstellung von Permanentmagneten auf den Pulverpressling ein Formtrennmittel allseitig aufgebracht. Dieses verhindert einen stofflichen Kontakt zwischen den Oberflächen von Pulverpressling und Pressform. Üblicherweise wird hierbei Graphit oder ein grafithaltiges Material verwendet. Das Auftragen dieses schwarzen Grafitpulvers auf den Magnetpulverpressling erfolgt in der Regel mittels eines Trägermediums, in welchem das Grafitpulver aufgeschlämmt wird, und in das der Pulverpressling eingetaucht wird. Weit verbreitet ist die Verwendung eines Alkohols als Trägermedium, beispielsweise Isopropanol, jedoch wird vereinzelt auch Wasser als Trägermedium eingesetzt. Beim Eintauchen wird die komplette Oberfläche des Pulverpresslings beschichtet. Anschließend verdunstet das Trägermedium, so dass eine dünne Graphitschicht auf der Oberfläche des Pulverpresslings zurückbleibt.

Wasserbasierende Schmiermittel sind jedoch nicht gut geeignet, da das Wasser das Magnetpulver schädigt und zusätzlich explosionsgefährliches Wasserstoffgas entsteht, das prozesstechnisch abgesaugt werden muss. Zudem stellt auch ein Alkohol als Trägermedium ein erhöhtes Sicherheitsrisiko dar, da es brennbar, explosionsfördernd, flüchtig und gesundheitsschädlich ist. Es kann und darf daher sowohl aus Brandschutzsicht als auch aus arbeitssicherheitsrechtlichen Gründen nur mit erhöhtem Prozessaufwand und Sicherheitsvorkehrungen verarbeitet werden, so dass eine erheblicher technischer Aufwand betrieben werden muss, um die Risiken für das Bedienpersonal in der Produktion minimal zu halten.

Ein weiterer Nachteil bei der Verwendung eines Trägermediums beim Auftragen des Formtrennmittels besteht in der abzuwartenden Trocknungszeit. So kann der Pulverpressling erst dann heißgepresst/ gesintert werden, wenn das Trägermedium verdunstet ist. Denn im Falle eines Alkohols würde dieser in der Pressform verbrennen. Die dabei entstehenden Temperaturen können das Presswerkzeug beschädigen. Außerdem kann die Verwendung eines flüssigen Trägermediums dazu führen, dass es in die Poren des Pulverpresslings eindringt, so dass eine Verbindung der Pulverpartikel beim Pressen behindert wird und sich in der Nähe der Oberfläche beim heißgepressten Pulverpressling Risse bilden.

Verfahren zum Aufbringen eines keramischen Formtrennmittels (z.B. Bornitrid) in einem flüssigen Tragermedium sind z.B. bekannt aus JP2000-012359A, EP0513891A, GB2235700A und JP05-135924A. Aus US5682591A ist ein Verfahren zur Beschichtung einer Pressform bekannt, bei dem ein Formtrennmittel elektrostatisch aufgetragen wird.

Es ist deshalb Aufgabe der vorliegenden Erfindung die genannten Nachteile zu überwinden und ein effizientes, sicheres, technisch vergleichsweise einfaches und schnelles Verfahren für die Permanentmagnetherstellung sowie eine entsprechende Vorrichtung bereitzustellen.

Diese Aufgabe wird durch das Verfahren mit den Merkmalen des Anspruchs 1 sowie durch eine Vorrichtung mit den Merkmalen des Anspruchs 11 erfüllt. Vorteilhafte Weiterbildungen sind in den jeweiligen Unteransprüchen angegeben.

Erfindungsgemäß wird ein Verfahren zur Herstellung eines Permanentmagneten aus einem Pulverpressling aus mechanisch vorverdichtetem Magnetpulver durch Heißpressen in einer Pressform vorgeschlagen, bei dem der Pulverpressling und/oder die Pressform vor dem Heißpressen mit einem Formtrennmittel beschichtet wird, um ein Anhaften des Pulverpresslings an der Pressform zu verhindern, wobei das Formtrennmittel elektrisch nicht leitend ist und aus einem keramischen Material besteht oder ein keramisches Material enthält, welches elektrostatisch auf den Pulverpressling und/oder die Pressform aufgetragen wird.

Des Weiteren wird erfindungsgemäß eine Vorrichtung zur Herstellung eines Permanentmagneten aus einem Pulverpressling aus mechanisch vorverdichtetem Magnetpulver vorgeschlagen, umfassend ein beheizbares Formwerkzeug in dem eine Pressform zur Aufnahme des Pulverpresslings ausgebildet ist, sowie einen Pressstempel zum Heißpressen des Pulverpresslings in der Pressform zu einem Rohmagneten, wobei sich bestimmungsgemäß während des Heißpressens zwischen dem Pulverpressling und der Pressform ein Formtrennmittel befindet, um ein Anhaften des Pulverpresslings an der Pressform zu verhindern, wobei eine mit einem ersten Spannungspotenzial verbundene Sprühdüse zum elektrostatischen Auftragen des Formtrennmittels auf den mit einem zweiten Spannungspotenzial verbundenen Pulverpressling und/oder die mit einem zweiten Spannungspotenzial verbundene Pressform, wobei das Formtrennmittel elektrisch nicht leitfähig ist und aus einem keramischen Material besteht oder ein keramisches Material enthält.

Der Kerngedanke der Erfindung liegt in der Kombination zweier Teilaspekte, nämlich in der Verwendung eines bestimmten Materials als Formtrennmittel sowie in seinem Auftragungsverfahren.

Hinsichtlich des Auftragungsverfahrens zeigten Versuche, trockenes Garfitpulver an einen Pulverpressling anhaften zu lassen, indem der Pulverpressling in eine Pulvermenge aus Grafit gedrückt wurde, um eine lose Beschichtung zu erreichen, dass das trockene Pulver nicht an den Pulverpresslingen anhaftet. Ein anderes, aus der Pulverbeschichtung von Blechen bekanntes Verfahren, bei dem das zu beschichtende Werkstück elektrostatisch aufgeladen wird, um das Pulver abzuscheiden, ist ebenfalls nicht unmittelbar verwendbar. Versuche haben gezeigt, dass ein elektrostatisches Abscheiden von reinem Grafit als Formtrennmittel oder ein überwiegend grafithaltiges Formtrennmittel aufgrund der Leitfähigkeit von Grafit nicht möglich ist. Es wurde deshalb nach einem alternativen Formtrennmittel gesucht, das elektrostatisch aufgetragen werden kann.

Erfindungsgemäß wird nun vorgeschlagen, ein elektrisch nicht leitendes Formtrennmittel oder zumindest ein Formtrennmittel, das einen sehr hohen ohmschen Widerstand, insbesondere im Megaohmbereich besitzt, zu verwenden, das aus einem keramischen Material besteht oder ein solches zumindest enthält. Im zweiten Fall handelt es sich bei dem Formtrennmittel um ein Stoffgemisch, welches das keramische Material enthält. Die fehlende elektrische Leitfähigkeit stellt sicher, dass ein elektrostatisches Auftragen des Formtrennmittels möglich ist.

Vorzugsweise ist das Formtrennmittel grafitfrei oder zumindest im Wesentlichen grafitfrei insoweit, als dass ein gewisser Grafitanteil nicht zu einer wesentlichen elektrischen Leitfähigkeit des Formtrennmittels führt. So kann durch das Grafit zwar eine geringe elektrische Leitfähigkeit entstehen, jedoch sollte diese nicht so hoch sein, dass der ohmsche Widerstand geringer als ein Megaohm wird, vorzugsweise noch deutlich darüber liegt. Ein solcher Grafitanteil sollte einen Volumenanteil von 10% nicht überschreiten. Grafit verbessert die Schmiereigenschaft des Formtrennmittels und verbessert die Verarbeitung eines Werkstücks beim Pressen.

Das elektrostatische Auftragen eines keramischen Materials als Formtrennmittel hat diverse Vorteile. Zum einen kann auf die Verwendung von sicherheitsbedenklichen Alkoholen als Trägermedium für das Formtrennmittel verzichtet werden. Der technische Aufbau der Vorrichtung vereinfacht sich dadurch und das Sicherheitsrisiko für Personal und Einrichtung ist minimiert. Zudem muss nicht abgewartet werden, bis das Trägermedium verdunstet bzw. der Pulverpressling getrocknet ist (Ablüften des Trägermediums), um ihn heiß zu pressen, sodass die beschichteten Presslinge sofort nachdem Beschichten verarbeitet werden können.

Mit dem erfindungsgemäßen Verfahren ist es folglich möglich, erheblich mehr Permanentmagnete pro Zeiteinheit herzustellen.

Sofern das Formtrennmittel grafitfrei oder zumindest im Wesentlichen grafitfrei ist, ergibt sich ein zusätzlicher Vorteil dadurch, dass die Magnete nach dem Heißpressen äußerlich nicht mehr mit Graphit beschichtet, d.h. "schmutzig" sind. Somit entstehen keine sauberkeitsspezifischen Probleme bei dieser Art der Beschichtung.

Ein weiterer Vorteil des elektrostatischen Auftragens liegt in der gleichmäßigen Beschichtung der Oberfläche, zumindest des zugänglichen Teils derselben. Denn bei dem elektrostatischen Auftragen wird pulvriges Formtrennmittel mittels Druckluft durch eine mit einem ersten elektrischen Spannungspotenzial verbundenen Sprühdüse getrieben und dabei elektrostatisch aufgeladen. Aus der Sprühdüse austretend werden die elektrisch geladenen Pulverpartikel in einem elektrischen Feld beschleunigt und an der Oberfläche des mit einem zweiten Spannungspotential, insbesondere Masse verbundenen stehenden Objekts, insbesondere der Pulverpressling oder die Pressform, abgeschieden. Das elektrische Feld ist dabei durch die Spannungsdifferenz zwischen dem ersten und dem zweiten Potenzial bedingt. Die gleichmäßige Feldlinienverteilung des elektrischen Feldes sorgt dafür, dass das keramische Material gleichmäßig auf der Oberfläche abgeschieden wird. Obgleich der Pulverpressling bevorzugt im Wesentlichen quaderförmig ist, kann er dennoch eine beliebige Geometrie und Oberflächenstruktur aufweisen, da die Feldlinien die geladenen Partikel des keramischen Materials in alle Oberflächenbereiche des Pulverpresslings führen. Insoweit kann auch die Pressform sehr homogen beschichtet werden.

Aus diesem Grund werden im Falle eines quaderförmigen Pulverpresslings vorzugsweise fünf Seiten elektrostatisch beschichtet. Mit seiner sechsten Seite liegt der Pulverpressling auf einer geerderten Ablage auf. Diese Ablage kann z.B. ein Kreuz aus metallischen Messerschneiden sein. Hierdurch ist die Kontaktfläche zwischen Pulverpressling und Ablage minimal und der Pulverpressling ist ebenfalls geerdet. Geeigneterweise wird der Pulverpressling anschließend gewendet, so dass seine Unterseite nun oben liegt, und es werden erneut fünf Seiten beschichtet.

Gegenüber einem flüssigen Trägermedium bietet die elektrostatische Auftragung des keramischen Materials des Weiteren den Vorteil, dass es ausschließlich an der Oberfläche des Presslings verbleibt und keine ungewünschten Trägerstoffe, Haftvermittler, etc. in die Poren des Pulverpresslings eindringen und beim Heißpressen Risse verursachen können. Durch das elektrostatische Auftragen eines keramischen Materials oder eines ein solches enthaltenden Formtrennmittels wird eine Rissbildung an der Oberfläche des Pulverpresslings beim Heißpressen vermieden.

Keramisches Material eignet sich besonders gut als Trennmittel für das erfindungsgemäße Verfahren, da es zum einen elektrostatisch aufgeladen werden kann und ein Anhaften von Magnetpulver an der Pressform verhindert. Zudem widersteht es den extremen Bedingungen des Heißpressens in der Pressform, insbesondere weder seinen eigenen Zustand ändert noch mit dem Pulverpressling oder der Pressform reagiert oder deren Zustand ändert und auch die magnetischen Eigenschaften des Pulverpresslings nicht beeinträchtigt.

Besonders geeignet als keramisches Material hat sich Bornitrid herausgestellt, das die genannten Eigenschaften allesamt erfüllt. Es wird demgemäß vorgeschlagen, zum Heißpressen/ Sintern von Pulverpresslingen aus Magnetpulver diese und/ oder die Pressform vorher mit reinen Bornitrid zu beschichten. Bei der Verwendung von Bornitrid gibt es keine Auswirkung auf das Umformverhalten des Pulverpresslings und seine magnetischen Eigenschaften bleiben erhalten.

Besonders bevorzugt wird hexagonales Bornitrid als Formtrennmittel verwendet oder ein Formtrennmittel, das hexagonales Bornitrid enthält. Denn hexagonales Bornitrid hat besondere Schmiereigenschaften, so dass Relativbewegungen zwischen Pulverpressling und Pressvorrichtung, welche insbesondere die Pressform und einen Pressstempel umfasst, zugelassen werden und nicht zu Verspannungen oder Verwerfungen im Pulverpressling oder Rohmagneten führen.

Nach dem elektrostatischen Auftragen des keramischen Materials auf den Pulverpressling oder die Pressform wird der Pulverpressling heißgepresst. Dies erfolgt vorzugsweise innerhalb eines Zeitraums von weniger als 20 Stunden, da mit zunehmender Wartezeit die elektrostatische Aufladung der Pulverpartikel des Formtrennmittels verloren geht und das Formtrennmittel folglich auf der Oberfläche nach und nach abgeht.

Der heißgepresste Pulverpressling bildet einen Rohmagneten, der einer weiteren Verarbeitung unterzogen werden kann. Vorzugsweise wird der Rohmagnet innerhalb einer zweiten Pressform heißfließgepresst wird, damit er seine endgültige Form und Größe erhält. Ferner wird dadurch eine Vorzugsausrichtung der Magnetisierung auf den Rohmagneten aufgeprägt. Die magnetische Vorzugsrichtung entsteht in Pressrichtung bzw. senkrecht zur Fließrichtung, bei dem herzustellenden Magneten geeigneterweise in Richtung seiner Dicke. Das Heißfließpressen erfolgt vorzugsweise bei ähnlichen Temperaturen wie das Heißpressen, beispielsweise mit einer um maximal 20°C verschiedenen Temperatur.

Die zweite Pressform ist in zumindest einer Raumrichtung größer als der Rohmagnet, so dass er infolge des Pressens die innere Form der zweiten Pressform annimmt, d.h. in diese zweite Pressform hineinfließt. Da beim Heißfließpressen eine Relativbewegung zwischen Rohmagnet und Pressform erfolgt, ist es von Vorteil, beim Heißfließpressen ein Schmiermittel auf dem Rohmagneten zu haben. Durch das Heißpressen brennt das Formtrennmittel in den Rohmagneten allerdings ein, so dass es danach noch vorhanden ist, und idealerweise als solches Schmiermittel verwendet werden kann. Es bildet dann im nachfolgenden Heißfließpressen einen Schmiermittelfilm. Besonders gute Schmiereigenschaften hat hexagonales Bornitrit, so dass sich dieses hervorragend als Formtrennmittel beim Heißpressen und gleichzeitig als Schmiermittel beim Heißfließpressen eignet. Um die Schmiereigenschaft des Formtrennmittels noch weiter zu erhöhen, kann Grafit zugesetzt werden, vorzugsweise jedoch mit einem Volumenanteil von weniger als 10%, um die elektrische Isolationsfähigkeit nicht zu beeinträchtigen.

Obgleich das zusätzliche Auftragen einer Schmiermittelschicht auf den Rohmagneten vor dem Heißfließpressen also nicht unbedingt erforderlich ist, kann das Formtrennmittel dennoch vor dem Heißfließpressen erneut aufgetragen werden, um sicherzustellen, dass eine ausreichend dicke Schmiermittelschicht auf der gesamten Oberfläche vorhanden ist. Hierfür muss der Rohmagnet nicht einmal abkühlen.

Vielmehr kann er rotglühend aus der Heißpressform kommend erneut mit dem Formtrennmittel beschichtet, quasi nachgeschmiert, und in die Heißfließpressform gelegt werden.

Das Auftragen des nun als Schmiermittel wirkenden Formtrennmittels auf den Rohmagneten erfolgt bevorzugt wie zuvor elektrostatisch, da die hierfür notwendigen technischen Mittel, ohnehin vorhanden sind und somit keine zusätzliche Beschichtungseinheit benötigt wird.

Es wird daher vorgeschlagen, vor dem Heißfließpressen ein Schmiermittel aus einem keramischen Material auf den Rohmagneten und/oder die zweite Pressform aufzutragen, wobei das Schmiermittel identisch dem erfindungsgemäßen Formtrennmittel und seinem elektrostatischen Auftragungsverfahren ist. Diesbezüglich wird hier auf die Ausführungen zum Formtrennmittel verwiesen.

Zum Beschichten und weiteren Prozessieren des Pulverpresslings oder Rohmagneten ist es erforderlich, ihn zu greifen oder zumindest zu halten und zu bewegen, insbesondere ihn gegebenenfalls zu funktionsspezifischen Bearbeitungsstationen (Heißpresse, Heißfließpresse) zu transportieren. Sofern hierbei das Formtrennmittel auf der Oberfläche des Presslings oder Rohmagneten verbleiben soll, sind besondere Mittel vorzusehen. Es hat sich gezeigt, dass ein seitliches Greifen durch übliche Greif- und sonstige Haltewerkzeuge der Prozess- und Automatisierungstechnik nachteilig ist, da das Formtrennmittel weitgehend abgeht. Dies ist neben dem mechanischen Abrieb insbesondere auch darauf zurückzuführen, dass die Greif- und Haltewerkzeuge und ihre Teile aus Metall bestehen und gegebenenfalls geerdet sind, so dass die elektrischen Ladungen der Pulverpartikel beim Halten über das Haltewerkzeug abfließen.

Bei einem Wenden des Pulverpresslings oder Rohmagneten nach dem elektrostatischen Beschichten der ersten fünf Oberflächen ist dies unkritisch, sofern die Greifstelle dort liegt, gegebenenfalls abgehendes Formtrennmittel durch das erneute Beschichten nach dem Wenden wieder aufgebracht wird. Zum Wenden des Pulverpresslings oder Rohmagneten kann also ein Greifer mit Greiffingern den Pulverpresslings oder Rohmagneten seitlich greifen, wenden und wieder auf die Ablage legen.

Nach dem vollständigen Beschichten der Oberfläche, d.h. insbesondere beim Einlegen des beschichteten Pulverpresslings in die Heißpressform oder des beschichteten Rohmagneten in die Heißfließpressform darf jedoch kein oder nur minimal Formtrennmittel abgehen.

Hierzu wird vorgeschlagen, dass ein Halten des Pulverpresslings oder des Rohmagneten an seiner Oberseite zum Zwecke seines Bewegens mittels eines Haltewerkzeugs erfolgt, das eine elektrisch isolierende Halteplatte aufweist, die beim Halten mit der mit Formtrennmittel beschichteten Oberseite des Pulverpresslings oder Rohmagneten in Kontakt tritt. Dies hat den Vorteil, dass das Formtrennmittel beim Halten seine elektrostatische Ladung nicht verliert und somit nicht so leicht abgeht.

Beispielsweise kann die Halteplatte aus einem elektrisch isolierenden Kunststoff bestehen. Ein besseres Ergebnis hat sich jedoch gezeigt, wenn die Halteplatte aus demselben Material wie das Formtrennmittel besteht. Die Halteplatte kann folglich eine Platte aus Bornitrid sein, so dass beim Halten des beschichteten Pulverpresslings oder Rohmagneten dieselben Materialien miteinander in Kontakt treten. Es hat sich gezeigt, dass in diesem Fall erheblich weniger Formtrennmittel an der Halteplatte haften bleibt als bei einer Halteplatte aus Kunststoff.

Bevorzugt ist das Haltewerkzeug ein Magnetheber zur magnetischen Aufnahme des Pulverpresslings oder Rohmagneten. Hierzu kann das Haltewerkzeug auf der dem aufzunehmenden Pulverpressling oder Rohmagneten abgewandte Seite der Halteplatte Magnete aufweisen. Gemäß einer Ausführungsvariante können diese als schaltbare Elektromagnete ausgeführt sein, so dass eine steuerbare Aufnahme und Ablage der Pulverpresslinge und Rohmagnete mit dem Haltewerkzeug möglich ist. Das magnetische Feld dieser Elektromagnete kann somit gezielt ein- und ausgeschaltet werden. Bei Elektromagneten ist jedoch der Restmagnetismus des Eisenkerns der Spule zu berücksichtigen, wodurch sich Magnetpulverpartikel zunehmend an dem Haltewerkzeug ansammeln und zu einer Verunreinigung der Unterseite des Haltewerkzeugs führen können, wodurch Formtrennmittel zunehmen stärker beim Halten abgeht. Eine ständige Reinigung der Halteplatte wäre dann erforderlich.

Eine Möglichkeit diesen Nachteil zu überwinden, besteht darin, dass Elektromagnete relativ zur Halteplatte beweglich derart auszuführen, dass der Abstand zwischen Halteplatte und Elektromagnete verändert werden kann. So können die Elektromagnete auf einen größeren Abstand gefahren werden, so dass die Restmagnetisierung an der Halteplatte nicht mehr spürbar ist. Im Betrieb der Elektromagnete können diese dann nahe an die Halteplatte gefahren werden. Die Bewegung der Elektromagnete kann beispielsweise durch einen pneumatischen Antrieb erfolgen.

Vorteilhafterweise werden die Magnete der Halteplatte gemäß einer anderen Ausführungsvariante als Permanentmagnete ausgeführt, deren Abstand zur Halteplatte veränderbar ist. Dies hat den Vorteil, dass keine elektrische Einrichtung zur Bestromung der Magnete erforderlich ist, wodurch sich der Aufbau des Haltewerkzeugs erheblich vereinfacht und das Gewicht reduziert. Die Permanentmagnete werden auf einen Abgabeabstand gefahren, wenn der Pulverpressling oder Rohmagneten losgelassen werden soll. Dieser Abgabeabstand ist zu wählen, dass an der Halteplatte keine magnetische Kraft mehr wirkt. Vorzugsweise ist das Haltewerkzeug durch einen geschlossenen Kasten gebildet, dessen Unterseite die Halteplatte bildet, wobei die Magnete auf so großen Abstand zurück gezogen werden, dass der ganze Kasten außen unmagnetisch ist.

Erfindungsgemäß kann das Formtrennmittel sowohl auf den Pulverpressling bzw. den Rohmagneten als auch auf die entsprechende Pressform aufgebracht werden. Dies kann alternativ oder kumulativ erfolgen. Im Falle der Pressform ist natürlich auch noch das kraftausübende Pressmittel, beispielsweise der Druck- oder Pressstempel, auf seiner zum Pressling oder Rohmagneten gerichteten Seite zu beschichten. Da bei jedem Pressvorgang etwas vom Formtrennmittel abgeht, muss vor jedem neuen Pressvorgang erneut beschichtet werden. Das Beschichten der Presslinge und Rohmagnete ist jedoch technisch einfacher, weil ihr Handling aufgrund ihrer geringen Größe und ihrer Unabhängigkeit vom maschinellen Aufbau einfacher ist. Zudem ist die Pressform nach dem Heißpressen noch sehr heiß. Diesbezüglich ist berücksichtigen, dass die Sprühpistole zum Auftragen des Formtrennmittels außen aus einem elektrisch isolierenden Material bestehen muss, um keinen elektrischen Schlag zu bekommen, und in der Regel aus einem Kunststoff (Thermoplast) besteht, welches durch die Hitze der Pressform beschädigt werden kann. Es müsste deshalb abgewartet oder die Pressform gekühlt werden, bis eine Beschichtung mit dem Formtrennmittel mittels herkömmlicher Sprühpistole möglich ist. Hierdurch würde es zu erheblichen Verzögerungszeiten beim Herstellungsprozess kommen. Deshalb wird gemäß einer bevorzugten Ausführung der Erfindung das Formtrennmittel auf den Pulverpressling bzw. den Rohmagneten aufgetragen.

Wie bereits erwähnt, ist es zum Beschichten des Pulverpresslings oder Rohmagneten erforderlich, ihn zu greifen oder zumindest zu halten. Dies ist dadurch bedingt, dass das Formtrennmittel allseitig aufzutragen ist und somit alle Seiten des Pulverpresslings oder Rohmagneten dem aus der Sprühdüse kommenden Sprühnebel zugänglich gemacht werden müssen.

Wie bereits zuvor angesprochen, umfasst das elektrostatische Auftragen vorzugsweise zwei Sprühschritte, wobei der Pulverpressling oder der Rohmagnet zwischen diesen bewegt, insbesondere gewendet wird.

So umfasst das elektrostatische Auftragen einen ersten Sprühschritt, bei dem das Formtrennmittel auf nur einen Teil der Oberfläche des Pulverpresslings oder Rohmagneten aufgetragen wird, beispielsweise auf fünf Seiten seiner Oberfläche. Anschließend wird die noch nicht beschichtete Restoberfläche des Pulverpresslings oder Rohmagneten für einen zweiten Sprühschritt des elektrostatischen Auftragens zugänglich gemacht. Bei diesem zweiten Sprühschritt wird dann das Formtrennmittel zumindest auf diese Restoberfläche elektrostatisch aufgetragen. Es können aber auch Teile der Oberfläche doppelt besprüht werden. Vorzugsweise erfolgt das zweitmalige Auftragen aber ebenfalls wieder auf fünf Oberflächenseiten.

Der erste Sprühschritt kann gemäß einer einfachen Ausführungsvariante erfolgen während der Pulverpressling oder Rohmagnet auf einer Ablage oder in einer Form liegt. Im Falle der Ablage ist seine Oberfläche bis auf die Standfläche, mit der er auf der Ablage aufliegt, zugänglich, d.h. seine Oberseite und seine Randseite oder Randseiten (abhängig von seiner Geometrie). Liegt er in einer Form ein, beispielsweise in der Pressform, in der das Magnetmaterial verdichtet wurde, ist zumindest seine Oberseite frei zugänglich. Sofern er über die Form hinaus vorsteht, ist auch ein Teil der Randseite oder Randseiten zugänglich. Die Ablage kann beispielsweise ein Kreuz aus Messerschneiden, ein Gitter oder eine elektrische leitende Platte sein.

Nach dem Beschichten der zugänglichen Oberfläche im ersten Sprühschritt kann ein Greifwerkzeug an den Pulverpressling oder Rohmagneten im Bereich der bereits beschichteten Oberfläche angesetzt werden und diesen hochheben, so dass seine Unterseite bzw. die unbeschichtete Restoberfläche zugänglich wird. Beispielsweise kann es sich dabei um einen Greifer mit Fingern handeln, der den Pulverpressling oder der Rohmagnet seitlich greift. Soweit hierbei an der Kontaktstelle Formtrennmittel abgeht, wird dieses bei dem zweiten Sprühschritt wieder aufgetragen. Es kann nun ein Wenden des Pulverpresslings oder Rohmagneten mit erneutem Ablegen auf der Ablage erfolgen, um die Restoberfläche zur Sprühdüse zuzuwenden. Die ehemals unten liegende Unterseite ist dann die Oberseite.

Wenngleich hier ein zweistufiges Sprühverfahren beschrieben wird, ist ein einstufiges elektrostatisches Beschichtungsverfahren ebenso grundsätzlich möglich. So kann der Pulverpressling oder Rohmagnet anstelle auf einer Ablage auf einem Metallgitter oder Drahtnetz aus dünnen Gitterstäben oder Drähten abgestellt/ abgelegt werden. Dies ermöglicht das Beschichten von allen Seiten gleichzeitig in nur einem einzigen Sprühvorgang. Hierzu kann gegebenenfalls eine bewegliche Sprühdüse oder können zwei oder mehr aus unterschiedlichen Richtungen sprühenden Sprühdüsen verwendet werden. Zwar bleiben diejenigen Teilbereiche der Oberfläche, die mit den Gitterstäben oder Drähten in Kontakt stehen, zunächst unbeschichtet. Jedoch würden sich diese grabenähnlichen Freizonen schließen, wenn der beschichtete Pressling oder Rohmagnet in die Pressform eingelegt wird, da Teile des pulvrigen Formtrennmittels in diese Freizonen gedrückt werden.

Weitere Merkmale und Vorteile des erfindungsgemäßen Verfahrens sowie der erfindungsgemäßen Vorrichtung werden nachfolgend anhand von Ausführungsbeispielen und der beigefügten Figuren erläutert. Es zeigen:
- Figur 1:: ein Ablaufdiagramm zu einer Variante des erfindungsgemäßen Verfahrens
- Figur 2:: eine Querschnittsdarstellung durch ein Verdichtungswerkzeug der erfindungsgemäßen Vorrichtung mit einliegendem Pulverpressling
- Figur 3:: eine Querschnittsdarstellung durch die Werkzeuganordnung beim ersten Sprühschritt des elektrostatischen Auftragens des Formtrennmittels
- Figur 4:: eine Querschnittsdarstellung durch die Werkzeuganordnung beim Greifen des Pulverpresslings
- Figur 5:: eine Querschnittsdarstellung durch die Werkzeuganordnung beim zweiten Sprühschritt des elektrostatischen Auftragens des Formtrennmittels
- Figur 6:: eine Querschnittsdarstellung durch die Werkzeuganordnung vor dem Heben des Pulverpresslings mittels Magnetheber
- Figur 7:: eine Querschnittsdarstellung durch das Presswerkzeug beim Einsetzen des Pulverpresslings in die Pressform des Presswerkzeugs
- Figur 8:: eine Querschnittsdarstellung durch das Presswerkzeug vor dem Heißpressen des Pulverpresslings
- Figur 9:: eine Querschnittsdarstellung durch das Presswerkzeug nach dem Heißpressen des Pulverpresslings

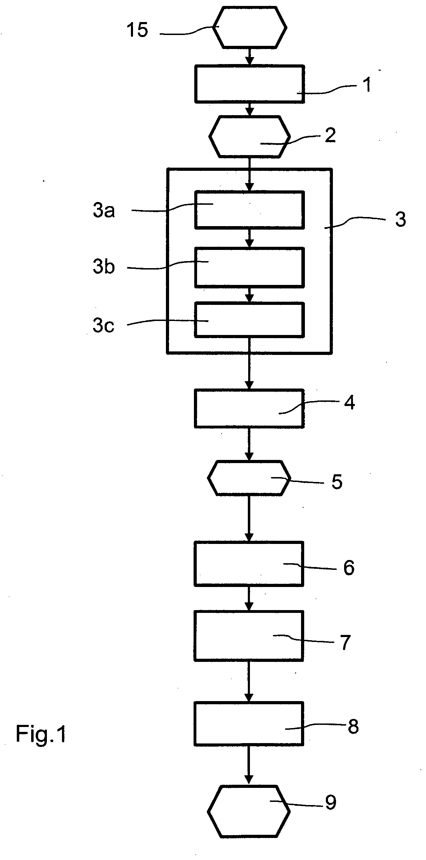

Die Herstellung eines Permanentmagneten 9 nach dem erfindungsgemäßen Verfahren ist in Figur 1 beispielhaft in einem Flussdiagramm dargestellt und wird nachfolgend in Zusammenhang mit den anderen, eine beispielhafte Vorrichtung veranschaulichenden Figuren erläutert.

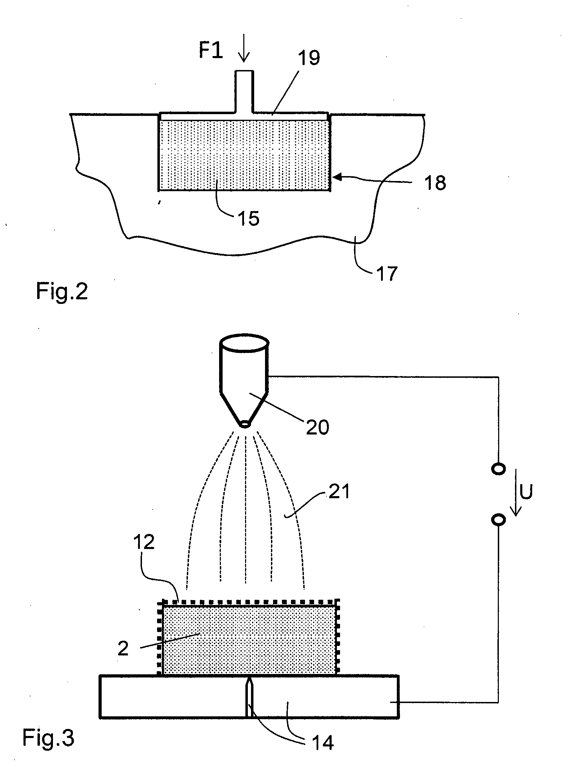

Ausgangspunkt stellt vorliegendes Magnetpulver 15 dar, das im Stand der Technik hinreichend bekannt ist und zur Erreichung starker Dauermagnete zumeist Bestandteile seltener Erden wie beispielsweise Neodym oder Dysprosium aufweist. In einem ersten Verfahrensschritt 1, wird das pulverförmige Permanentmagnetmaterial 15 zu einem Pulverpressling 2 verdichtet. Ein hierfür verwendbares Verdichtungswerkzeug 17, das Teil der erfindungsgemäßen Vorrichtung ist, zeigt Figur 2 im Querschnitt. In dem Verdichtungswerkzeug 17 ist eine Verdichtungsform 18 ausgebildet, in der eine zu verdichtende Menge Magnetpulver 15 eingefüllt ist. In die Verdichtungsform 18 kann ein Verdichtungsstempel 19 hinein bewegt werden, der das Magnetpulver 15 unter Ausübung einer Druckkraft F1 komprimiert. Nach dem Verdichten 1 liegt ein Pulverpressling 2 vor, der eine poröse Struktur aufweist und der bei Einwirkung äußerer Kräfte zerbröselt.

Der hergestellte Pulverpressling 2 wird anschließend mit einem Formtrennmittel 12 beschichtet. Dies erfolgt geeigneterweise außerhalb des vorherigen Verdichtungswerkzeugs 17 auf einer kreuzartigen Ablage 14 aus Messerschneiden, wie in Figur 3 zu erkennen ist. In diesem Fall unterteilt sich der Beschichtungsvorgang 3 in zwei Teilvorgänge, einem ersten Sprühschritt 3a und einem zweiten Sprühschritt 3c.

Das Beschichten erfolgt in einem elektrostatischen Sprühverfahren 3 mittels einer Sprüheinheit, die in Figur 3 veranschaulicht ist und zumindest eine elektrostatische Sprühdüse 20/ Pulversprühpistole umfasst, aus der das Formtrennmittel 12 unter Druck in Form eines Sprühnebels 21 austritt. Dabei ist besonders eine Flachstrahldüse geeignet, da die Staubentwicklung bei einer Rundstrahldüse höher ist.

Zwischen der Sprühdüse 20 und dem Pulverpressling 2 liegt eine Spannung U an, so dass ein elektrisches Feld zwischen Sprühdüse 20 und Pressling 2 besteht. In der Regel liegt die Sprühdüse 20 auf einem Hochspannungspotenzial, wohingegen der zu beschichtende Pulverpressling 2 elektrisch mit Masse verbunden sein kann. Das Magnetmaterial 15 ist elektrisch leitfähig. Gleiches gilt für das Verdichtungswerkzeug 17, das aus Metall besteht. Beim Austritt aus der Sprühdüse 20, werden die Formtrennmittelpartikel geladen und fliegen entlang der elektrischen Feldlinien zum Pulverpressling 2, wo sie homogen abgeschieden werden. Da das Grundprinzip der elektrostatischen Pulverbeschichtung allgemein bekannt ist, wird zur Erläuterung des Verfahrens auf die einschlägige Literatur hierzu verweisen.

Als Formtrennmittel 12 wird das keramische Material Bornitrid (BN) in seiner hexagonalen Kristallstruktur verwendet. Bornitrid ist nicht elektrisch leitend und kann besonders gut elektrostatisch auf den Pulverpressling 2 aufgetragen werden. Das erfindungsgemäße elektrostatische Auftragen von Bornitrid bietet gegenüber der Auftragung von Graphit mittels alkoholischer Trägerflüssigkeit den Vorteil, dass der Herstellungsprozess zeitlich verkürzt, technisch weniger aufwändig und sicherer für Umgebung und Personal wird, da keine Wartezeiten für das Ablüften der Trägerflüssigkeit benötigt werden und auf die brennbare und gesundheitsschädliche Trägerflüssigkeit verzichtet werden kann.

Figur 3 zeigt den ersten Sprühschritt 3a, bei dem das Formtrennmittel 4 auf einen Teil der Oberfläche des Pulverpresslings 2, hier auf fünf Seiten aufgetragen wird bzw. aufgetragen ist. Der hier zugängliche Teil der Oberfläche ist die Oberseite des Pulverpresslings 2 und die vier Seitenflächen.

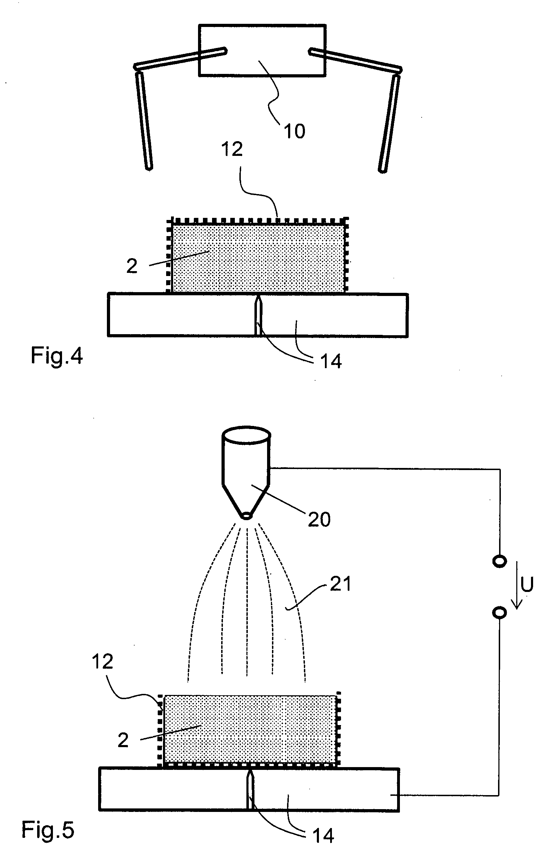

Anschließend wird überschüssiges Formtrennmittel abgesaugt und der Pulverpressling 2 mit einem Greifwerkzeug 10 seitlich gegriffen, um die noch unbeschichtete Restoberfläche zum elektrostatischen Beschichten zugänglich zu machen. Dies ist in Figur 4 rein schematisch dargestellt. Das Greifwerkzeug 10 ist ein Greifer mit Fingern, zwischen denen der Pulverpressling 2 gehalten, vom Greifer 10 gewendet und schließlich wieder auf die Ablage 14 gelegt wird, wo der zweite Sprühschritt 3b stattfindet. Dies veranschaulicht Figur 5.

In Figur 5 in nunmehr die unbeschichtete Unterseite des Pulverpresslings zur Sprühdüse 20 gerichtet. Diese nun oben liegende Unterseite sowie die vier Seitenflächen werden nun in dem zweiten Sprühschritt 3b elektrostatisch beschichtet. Stellen, an denen der Greifer 10 Formtrennmittel 12 abgelöst hat, werden dadurch neu beschichtet.

Auch nach dem zweiten Sprühschritt 3c oder wenigstens nach diesem zweiten Sprühschritt wird das überschüssige Formtrennmittel von dem Pulverpressling abgesaugt. Es kann wiederverwendet werden. Dabei kann es vorkommen, dass infolge des Pressens vom Presswerkzeug abgeschleifte Metallpartikel mit aufgenommen werden und das Formtrennmittel verunreinigen. Gleichwohl haben Versuche gezeigt, dass diese die fehlende oder zumindest sehr geringe elektrische Leitfähigkeit nicht beeinträchtigen.

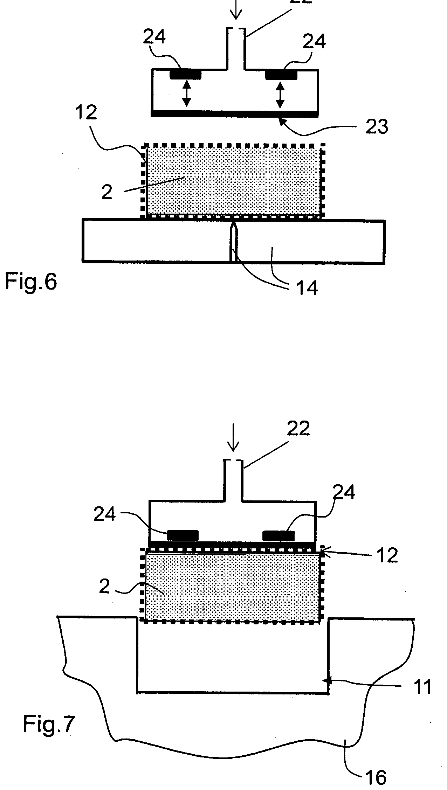

Der vollständig mit Formtrennmittel 4 beschichtete Pulverpressling 2 wird anschließend in eine Pressform 11 eines beheizbaren Formwerkzeugs 16 befördert, in der das Heißpressen stattfindet. Dies wird durch Figur 6 veranschaulicht. Das Haltewerkzeug 22 ist durch einen Magnetheber gebildet. Er weist in der Ausführungsvariante gemäß Figur 6 und 7 eine am beschichteten Pulverpressling 2 bestimmungsgemäß zur Anlage kommende Halteplatte 23 auf, auf deren dem Pulverpressling 2 abgewandten Seite Magnete 24 angeordnet sind. Diese sind geeigneterweise als Permanentmagnete 24 ausgebildet, die relativ zur Halteplatte 23 auf Abstand gefahren und an diese angenähert werden können, um den Pulverpressling 2 gesteuert aufnehmen und auch wieder ablegen zu können. Die Verfahrbewegung erfolgt mittels eines nicht dargestellten pneumatischen Antriebs.

Die Halteplatte 23, zumindest deren Kontaktfläche zum Pulverpressling 2, besteht aus demselben Material wie die Formtrennschicht 12, d.h. sie ist aus Bornitrid gefertigt. Durch diese Materialidentität bleibt das Formtrennmittel 12 zum einen nicht in stofflich-chemischer Hinsicht an der Kontaktfläche haften, noch geht es infolge eines Ladungsverlusts ab, weil Bornitrid elektrisch isoliert und die elektrostatische Ladung des Formtrennmittels 12 nicht abfließen kann.

Der Pfeil in Figur 6 gibt an, dass das Haltewerkzeug 22 in Richtung zum Pulverpressling 2 hin bewegt wird, um mit dessen beschichteter Oberseite in Anlage zu gelangen. Figur 7 zeigt einen Zustand, in dem der Pulverpressling 2 vom Haltewerkzeug 22 magnetisch gehalten ist und in die Pressform 11eingesetzt wird. Zwischen der Halteplatte 23 und dem Pulverpressling 2 liegt dabei eine Schicht Formtrennmittel 12.

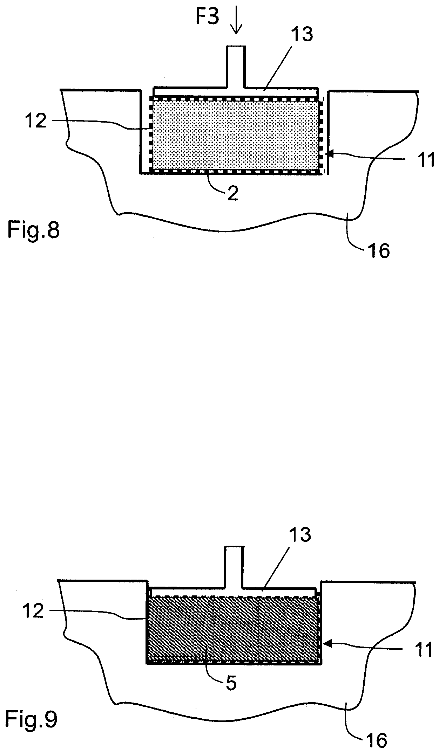

Der Ausgangszustand des Heißpresswerkzeugs 16, 13 der erfindungsgemäßen Vorrichtung für das Heißpressen ist in Figur 8 dargestellt, der entsprechende Verfahrensschritt in Figur 1 mit der Bezugsziffer 4 versehen. Das Heißpresswerkzeug 13, 16 umfasst neben dem Formwerkzeug 16 einen in die Pressform 11 formschlüssig hinein bewegbaren Pressstempel 13. Man erkennt in Figur 8, dass der Pulverpressling 2 allseitig mit dem Formtrennmittel 12 umgeben und kleiner als die Pressform 11 ist.

Beim Heißpressen 4 wird das Permanentmagnetmaterial 15 des Pulverpresslings 2 bevorzugt für 20 Sekunden bis 50 Sekunden einer Temperatur von 750°C bis 850°C ausgesetzt, auf die das Formwerkzeug aufgeheizt wird. Gleichzeitig wird durch den Pressstempel 13 ein Druck F3 zwischen 10 kN/ cm² bis 15 kN/ cm² vorzugsweise ca. 12 kN/ cm² auf den Pulverpressling 2 ausgeübt. Bei diesen Bedingungen schmelzen die Oberflächen der Pulverkörner und die Schmelze wird in die Poren des Pulverpresslings gedrückt. Der heißgepresste Pulverpressling 2 bildet einen Rohmagneten 5 mit einer kompakten Form, wobei die magnetischen Eigenschaften des Pulvermaterials 15 erhalten bleiben. Der Endzustand des Heißpressens 4 ist in Figur 9 dargestellt. Dabei liegt in der Pressform 11 nun der Rohmagnet 5 ein.

Abhängig von der späteren Verwendung des Rohmagneten 5 können noch weitere, optionale Verfahrensschritte durchgeführt werden. So kann der Rohmagnet 5 beispielsweise in einem Heißfließpressschritt 6 innerhalb einer zweiten Pressform in eine Endform gebracht werden, wobei er unter Druck und Temperatur in diese Endform fließt. Die zweite Pressform ist somit in zumindest eine Raumrichtung größer als der Rohmagnet, in den anderen Raumrichtungen zumindest gleich groß, bzw. nur geringfügig größer, um ich in die zweite Pressform einlegen zu können. Durch das Fließen kommt es zu einer Relativbewegung der äußeren Oberfläche des Rohmagneten 5 und der Innenfläche der zweiten Pressform sowie eines den Druck ausübenden Stempels. Bei diesem Heißfließverfahren ist es deshalb insbesondere vorteilhaft, ein Schmiermittel zu verwenden.

Es hat sich gezeigt, dass auch hier hexagonales Bornitrid als Schmiermittel verwendet werden kann und zu guten Ergebnissen, insbesondere einwandfrei ausgeformte Permanentmagnete 9 führt, da durch die hexagonale Struktur des Bornitrids ein Gleiten des heißgepressten Pulverpresslings 2 auf der Oberfläche der zweiten Pressform ermöglicht wird. Auf diese Weise ist auch die Herstellung komplexerer Magnetformen möglich.

Der Heißfließpressschritt 6 hat zudem die Wirkung, dass eine Vorzugsausrichtung der Magnetisierung erreicht wird. Die magnetische Vorzugsrichtung entsteht in Pressrichtung bzw. senkrecht zur Fließrichtung, bei dem herzustellenden Magneten geeigneterweise in Richtung seiner Dicke. Soll der herzustellende Permanentmagnet 9 also eine besonders hohe Magnetisierung in einer bestimmten Richtung besitzen, muss die mechanische Krafteinwirkung beim Pressen in dieser Richtung liegen.

Schließlich kann der Rohmagnet 5 oder der heißfließgepresste Rohmagnet mechanisch nachbehandelt werden, beispielsweise durch ein Schleif- und/oder Polierverfahren, das in Figur 1 mit der Bezugsziffer 7 versehen ist. Damit kann die Oberfläche des Rohmagneten 5 veredelt werden. Ferner kann beispielsweise die Größe oder Form des Rohmagneten präzise angepasst werden, so dass er in eine vorbestimmte Passform eingesetzt werden kann. Weiterhin kann es gewünscht sein, die Oberfläche zu Schutz- oder Designzwecken zu beschichten, beispielsweise zu lackieren oder mit einer anderen funktionsspezifischen Schicht zu versehen, beispielsweise zur Erhöhung der Härte.

In einem abschließenden Verfahrensschritt, der in Figur 1 mit der Bezugsziffer 8 angegeben ist, wird der heißfließgepresste Rohmagnet 5 magnetisiert. Dies erfolgt, indem der Rohmagnet 5 einem starken magnetischen Feld ausgesetzt wird. Hierdurch kann dem Rohmagneten 5 eine beliebige Magnetisierung aufgeprägt werden. Nach der Magnetisierung liegt dann der fertige Permanentmagnet 9 vor.

Es sei angemerkt, dass das erfindungsgemäße Verfahren nicht nur zur Herstellung einzelner Permanentmagnete verwendbar ist. Vielmehr können auch mehrere oder sogar viele Permanentmagnete 9 gleichzeitig hergestellt werden. So kann z.B. das Verdichtungswerkzeug 17 eine Vielzahl von Verdichtungsformen 18 aufweisen, in denen jeweils Magnetpulver 15 gleichzeitig mittels Verdichtungsstempel 19 zu einzelnen Presslingen 2 verdichtet wird. Entsprechend kann auch die elektrostatische Beschichtung aller Presslinge 2 gleichzeitig erfolgen. Der Magnetheber 22 kann hierfür eine alle Presslinge 2 überdeckende Platte 23 aufweisen, hinter der für jeden Pressling 2 jeweils ein Permanentmagnet 24 oder ein alle Presslinge erfassender Permanentmagnet angeordnet ist. Auch das Heißpresswerkzeug 16 kann entsprechend eine Vielzahl von Pressformen 11 aufweisen, in denen die beschichteten Pulverpresslinge gleichzeitig zu Rohmagneten 5 heißgepresst werden. Auf diese Weise ist kann das erfindungsgemäße Verfahren besonders effizient für die Herstellung von Dauermagneten eingesetzt werden.

### Bezugszeichenliste

- 1: Vorverdichten von Magnetpulver
- 2: Pulverpressling
- 3: elektrostatisches Sprühverfahren
- 3a: erster Sprühschritt, Beschichten einer Teiloberfläche
- 3b: Zugänglichmachung der Restoberfläche zum Beschichten
- 3c: zweiter Sprühschritt, Beschichten der Restoberfläche
- 4: Heißpressen/ Sintern mit Rekristallisierung
- 5: Rohmagnet
- 6: Heißfließpressen
- 7: mechanische Nachbehandlung
- 8: Magnetisierung
- 9: fertiger Permanentmagnet
- 10: Greifwerkzeug
- 11: Pressform für das Heißpressen
- 12: Formtrennmittel
- 13: Pressstempel
- 14: Ablage, Messerschneiden
- 15: Magnetpulver
- 16: Formwerkzeug
- 17: Verdichtungswerkzeug
- 18: Verdichtungsform
- 19: Verdichtungsstempel
- 20: Sprühdüse
- 21: Sprühnebel
- 22: Haltewerkzeug, Magnetheber
- 23: Halteplatte
- 24: Magnet, Permanentmagnet

## Patentansprüche

1. Verfahren zur Herstellung eines Permanentmagneten (9) aus einem Pulverpressling (2) aus mechanisch vorverdichtetem Magnetpulver (15) durch Heißpressen (4) in einer Pressform (11), bei dem der Pulverpressling (2) und/oder die Pressform (11) vor dem Heißpressen (4) mit einem Formtrennmittel (12) beschichtet wird, um ein Anhaften des Pulverpresslings (2) an der Pressform (11) zu verhindern, wobei das Formtrennmittel (12) elektrisch nicht leitfähig ist und aus einem keramischen Material besteht oder ein keramisches Material enthält, **dadurch gekennzeichnet, dass** das Formtrennmittel elektrostatisch auf den Pulverpressling (2) und/oder die Pressform (11) aufgetragen wird.

2. Verfahren nach Anspruch 1, **dadurch gekennzeichnet, dass** der heißgepresste Pulverpressling (2) einen Rohmagneten (5) bildet, der anschließend innerhalb einer zweiten Pressform heißfließgepresst wird, die in zumindest einer Raumrichtung größer als der Rohmagnet (5) ist.

3. Verfahren nach Anspruch 2, **dadurch gekennzeichnet, dass** vor dem Heißfließpressen ein Schmiermittelmittel aus einem keramischen Material auf den Rohmagneten (5) und/oder die zweite Pressform aufgetragen, insbesondere elektrostatisch aufgetragen wird.

4. Verfahren nach einem der vorherigen Ansprüche, **dadurch gekennzeichnet, dass** das keramische Material Bornitrid, insbesondere hexagonales Bornitrit ist oder enthält.

5. Verfahren nach einem der vorherigen Ansprüche, **dadurch gekennzeichnet, dass** ein Halten des Pulverpresslings (2) oder des Rohmagneten (5) zum Zwecke seines Bewegens mittels eines Haltewerkzeugs (22) erfolgt, das eine Halteplatte (23) aufweist, die aus einem elektrisch isolierenden Material, insbesondere aus demselben Material besteht, wie das Formtrennmittel (12).

6. Verfahren nach einem der vorherigen Ansprüche, **dadurch gekennzeichnet, dass** das elektrostatische Auftragen einen ersten Sprühschritt (3a) umfasst, bei dem das Formtrennmittel (12) auf nur einen Teil der Oberfläche des Pulverpresslings (2) oder Rohmagneten (5) aufgetragen wird, anschließend seine noch nicht beschichtete Restoberfläche für einen zweiten Sprühschritt (3c) zugänglich gemacht wird, und diese Restoberfläche dann in dem zweiten Sprühschritt (3c) des elektrostatischen Auftragens mit dem Formtrennmittel (12) beschichtet wird.

7. Verfahren nach Anspruch 6, **dadurch gekennzeichnet, dass** das Zugänglichmachen der Restoberfläche dadurch erfolgt, dass der Pulverpressling (2) oder der Rohmagnet (5) von einem Greifwerkzeug (10) im Bereich der bereits beschichteten Oberfläche gegriffen und gewendet oder gehoben wird.

8. Verfahren nach einem der vorherigen Ansprüche, **dadurch gekennzeichnet, dass** das Heißpressen (4) innerhalb von weniger als 20 Stunden nach dem Auftragen des Formtrennmittels (12) erfolgt.

9. Verwendung eines Formtrennmittels zur Herstellung eines Permanentmagneten aus einem Pulverpressling (2) aus mechanisch vorverdichtetem Magnetpulver (15) durch Heißpressen (4) in einer Pressform (11), wobei sich während des Heißpressens (4) zwischen dem Pulverpressling (2) und der Pressform (11) ein Formtrennmittel (12) befindet, um ein Anhaften des Pulverpresslings (2) an der Pressform (11) zu verhindern, wobei das Formtrennmittel (12) elektrisch nicht leitfähig ist und aus einem keramischen Material besteht oder ein keramisches Material enthält, **dadurch gekennzeichnet, dass** das Formtrennmittel elektrostatisch aufgetragen ist.

10. Verwendung nach Anaspruch 7, **dadurch gekennzeichnet, dass** das keramische Material Bornitrid, insbesondere hexagonales Bornitrid ist oder enthält.

11. Vorrichtung zur Herstellung eines Permanentmagneten (9) aus einem Pulverpressling (2) aus mechanisch vorverdichtetem Magnetpulver (15), umfassend ein beheizbares Formwerkzeug (16) in dem eine Pressform (11) zur Aufnahme des Pulverpresslings (2) ausgebildet ist, sowie einen Pressstempel (13) zum Heißpressen (4) des Pulverpresslings (2) in der Pressform (11) zu einem Rohmagneten (5), wobei sich bestimmungsgemäß während des Heißpressens (4) zwischen dem Pulverpressling (2) und der Pressform (11) ein Formtrennmittel (12) befindet, um ein Anhaften des Pulverpresslings (2) an der Pressform (11) zu verhindern, wobei das Formtrennmittel (12) elektrisch nicht leitfähig ist oder einen ohmschen Widerstand mindestens im Megaohmbereich aufweist, und aus einem keramischen Material besteht oder ein keramisches Material enthält, **gekennzeichnet durch** eine mit einem ersten Spannungpotential verbundene Sprühdose (20) zum elektrostatischen Auftragen des Formtrennmittels (12) auf den mit einem zweiten Spannungspotential in Kontakt stehenden Pulverpressling (2) und/oder die mit einem zweiten Spannungspotential verbundene Pressform.

12. Vorrichtung nach Anspruch 11, **gekennzeichnet, durch** ein Haltewerkzeug (22) zum Halten des mit dem Formtrennmittel (12) beschichteten Pulverpresslings (2) oder des mit dem Formtrennmittel (12) beschichteten Rohmagneten (5) zum Zwecke seines Bewegens, das eine Halteplatte (23) aufweist oder aus einer Halteplatte aus einem elektrisch isolierenden Material besteht.

13. Vorrichtung nach Anspruch 12, **dadurch gekennzeichnet, dass** die Halteplatte (23) aus demselben Material besteht, wie das Formtrennmittel (12), insbesondere aus Bornitrit besteht.

14. Vorrichtung nach Anspruch 11 oder 12, **dadurch gekennzeichnet, dass** das Haltewerkzeug (22) ein Magnetheber zur magnetischen Aufnahme des Pulverpresslings (2) oder Rohmagneten (5) ist.

15. Vorrichtung nach Anspruch 14, **dadurch gekennzeichnet, dass** auf der dem aufzunehmenden Pulverpressling (2) oder Rohmagneten (5) abgewandte Seite der Halteplatte (23) Permanentmagnete (24) angeordnet sind, deren Abstand zur Halteplatte (23) änderbar ist.

16. Vorrichtung nach einem der Ansprüche 11 bis 15, **dadurch gekennzeichnet, dass** die Sprühdüse eine Flachstrahldüse ist.

## Claims

1. Method for producing a permanent magnet (9) from a powder compact (2) made of mechanically pre-compressed magnet powder (15) by hot pressing (4) in a press mould (11), in which the powder compact (2) and/or the press mould (11) is/are coated, prior to hot pressing (4), with a mould release agent (12) in order to prevent the powder compact (2) adhering to the press mould (11), wherein the mould release agent (12) is not electrically conductive and is made of a ceramic material or contains a ceramic material, **characterized in that** the mould release agent is applied electrostatically to the powder compact (2) and/or to the press mould (11).

2. Method according to Claim 1, **characterized in that** the hot-pressed powder compact (2) forms a raw magnet (5) which is subsequently hot flow pressed in a second press mould that is larger than the raw magnet (5) in at least one spatial direction.

3. Method according to Claim 1, **characterized in that** prior to hot-flow pressing a lubricant made of a ceramic material is applied to the raw magnet (5) and/or to the second press mould, in particular electrostatically.

4. Method according to one of the preceding claims, **characterized in that** the ceramic material is or contains boron nitride, in particular hexagonal boron nitride.

5. Method according to one of the preceding claims, **characterized in that** the powder compact (2) or the raw magnet (5) is held, for the purpose of moving this item, by means of a holding tool (22) which has a holding plate (23) that is made of an electrically insulating material, in particular the same material as the mould release agent (12).

6. Method according to one of the preceding claims, **characterized in that** the electrostatic application comprises a first spraying step (3a) in which the mould release agent (12) is applied to just one part of the surface of the powder compact (2) or raw magnet (5), after which the as-yet uncoated remainder of its surface is made accessible for a second spraying step (3c), and this remainder surface is then coated with the mould release agent (12) in the second spraying step (3c) of the electrostatic application.

7. Method according to Claim 6, **characterized in that** the remainder surface is made accessible by the powder compact (2) or the raw magnet (5) being gripped by a gripping tool (10) in the region of the already-coated surface and then turned or raised.

8. Method according to one of the preceding claims, **characterized in that** the hot pressing (4) takes place within less than 20 hours after application of the mould release agent (12).

9. Use of a mould release agent for producing a permanent magnet (9) from a powder compact (2) made of mechanically pre-compressed magnet powder (15) by hot pressing (4) in a press mould (11), in which, during the hot pressing (4), a mould release agent (12) is present between the powder compact (2) and the press mould (11) in order to prevent the powder compact (2) adhering to the press mould (11), wherein the mould release agent (12) is not electrically conductive and is made of a ceramic material or contains a ceramic material, **characterized in that** the mould release agent is applied electrostatically.

10. Use according to Claim 7, **characterized in that** the ceramic material is or contains boron nitride, in particular hexagonal boron nitride.

11. Apparatus for producing a permanent magnet (9) from a powder compact (2) made of mechanically pre-compressed magnet powder (15), comprising a heatable mould tool (16) in which is formed a press mould (11) for receiving the powder compact (2) and a press punch (13) for hot pressing (4) the powder compact (2) in the press mould (11) to form a raw magnet (5), in which, during the hot pressing (4), a mould release agent (12) is designed to be present between the powder compact (2) and the press mould (11) in order to prevent the powder compact (2) adhering to the press mould (11), wherein the mould release agent (12) is not electrically conductive or has an ohmic resistance at least in the mega-ohm range, and is made of a ceramic material or contains a ceramic material, **characterized by** a spray nozzle (20), connected to a first voltage potential, for the electrostatic application of the mould release agent (12) to the powder compact (2) in contact with a second voltage potential and/or the press mould connected to a second voltage potential.

12. Apparatus according to Claim 11, **characterized by** a holding tool (22) for holding the powder compact (2) coated with the mould release agent (12) or the raw magnet (5) coated with the mould release agent (12), for the purpose of moving this item, which holding tool has a holding plate (23) or consists of a holding plate made of an electrically insulating material.

13. Apparatus according to Claim 12, **characterized in that** the holding plate (23) is made of the same material as the mould release agent (12), in particular boron nitride.

14. Apparatus according to Claim 11 or 12, **characterized in that** the holding tool (22) is a magnetic hoist for magnetically taking up the powder compact (2) or the raw magnet (5).

15. Apparatus according to Claim 14, **characterized in that** permanent magnets (24) are arranged on the other side of the holding plate (23) from the powder compact (2) or raw magnet (5) that are to be taken up, the distance between these permanent magnets and holding plate (23) being adjustable.

16. Apparatus according to one of Claims 11 to 15, **characterized in that** the spray nozzle is a flat jet nozzle.

## Revendications

1. Procédé de fabrication d'un aimant permanent (9) à partir d'un comprimé de poudre (2) en poudre magnétique (15) pré-compactée mécaniquement par pressage à chaud (4) dans un moule (11), dans lequel le comprimé de poudre (2) et/ou le moule (11) est, avant le pressage à chaud (4), revêtu d'un agent de démoulage (12) afin d'empêcher une adhérence du comprimé de poudre (2) sur le moule (11),
l'agent de démoulage (12) étant électriquement non conducteur et se composant d'un matériau céramique ou contenant un matériau céramique, **caractérisé en ce que** l'agent de démoulage est appliqué par voie électrostatique sur le comprimé de poudre (2) et/ou sur le moule (11).

2. Procédé selon la revendication 1, **caractérisé en ce que** le comprimé de poudre (2) pressé à chaud forme un aimant brut (5) qui est ensuite formé par fluage à chaud à l'intérieur d'un deuxième moule qui est plus grand que l'aimant brut (5) dans au moins une direction spatiale.

3. Procédé selon la revendication 2, **caractérisé en ce que**, avant le formage par fluage à chaud, un lubrifiant en matériau céramique est appliqué sur l'aimant brut (5) et/ou sur le deuxième moule, en particulier par voie électrostatique.

4. Procédé selon l'une des revendications précédentes, **caractérisé en ce que** le matériau céramique est ou contient du nitrure de bore, en particulier du nitrure de bore hexagonal.

5. Procédé selon l'une des revendications précédentes, **caractérisé en ce qu'**une retenue du comprimé de poudre (2) ou de l'aimant brut (5) en vue de son déplacement s'effectue au moyen d'un outil de retenue (22) qui présente une plaque de retenue (23) qui se compose d'un matériau électriquement isolant, en particulier du même matériau que l'agent de démoulage (12).

6. Procédé selon l'une des revendications précédentes, **caractérisé en ce que** l'application électrostatique comprend une première étape d'aspersion (3a) dans laquelle l'agent de démoulage (12) est appliqué seulement sur une partie de la surface du comprimé de poudre (2) ou de l'aimant brut (5), ensuite sa surface résiduelle encore non revêtue est rendue accessible pour une deuxième étape d'aspersion (3c), et cette surface résiduelle est ensuite revêtue de l'agent de démoulage (12) dans la deuxième étape d'aspersion (3c) de l'application électrostatique.

7. Procédé selon la revendication 6, **caractérisé en ce que** la surface résiduelle est rendue accessible par le fait que le comprimé de poudre (2) ou l'aimant brut (5) est agrippé et tourné ou soulevé par un outil de préhension (10) dans la zone de la surface déjà revêtue.

8. Procédé selon l'une des revendications précédentes, **caractérisé en ce que** le pressage à chaud (4) s'effectue dans un délai de moins de 20 heures après l'application de l'agent de démoulage (12).

9. Utilisation d'un agent de démoulage pour la fabrication d'un aimant permanent à partir d'un comprimé de poudre (2) en poudre magnétique (15) pré-compactée mécaniquement par pressage à chaud (4) dans un moule (11), un agent de démoulage (12) étant présent pendant le pressage à chaud (4) entre le comprimé de poudre (2) et le moule (11) pour empêcher une adhérence du comprimé de poudre (2) sur le moule (11), l'agent de démoulage (12) étant électriquement non conducteur et se composant d'un matériau céramique ou contenant un matériau céramique, **caractérisée en ce que** l'agent de démoulage est appliqué par voie électrostatique.

10. Utilisation selon la revendication 7, **caractérisée en ce que** le matériau céramique est ou contient du nitrure de bore, en particulier du nitrure de bore hexagonal.

11. Dispositif de fabrication d'un aimant permanent (9) à partir d'un comprimé de poudre (2) en poudre magnétique (15) pré-compactée mécaniquement, comprenant un outil de formage (16) chauffable dans lequel un moule (11) est constitué pour la réception du comprimé de poudre (2), ainsi qu'un poinçon (13) pour le pressage à chaud (4) du comprimé de poudre (2) dans le moule (11) pour donner un aimant brut (5), un agent de démoulage (12) étant présent de façon appropriée pendant le pressage à chaud (4) entre le comprimé de poudre (2) et le moule (11) pour empêcher une adhérence du comprimé de poudre (2) sur le moule (11), l'agent de démoulage (12) étant électriquement non conducteur ou présentant une résistance ohmique au moins dans la plage des mégohms, et se composant d'un matériau céramique ou contenant un matériau céramique, **caractérisé par** un flacon pulvérisateur (20) raccordé à un premier potentiel de tension pour l'application électrostatique de l'agent de démoulage (12) sur le comprimé de poudre (2) en contact avec un deuxième potentiel de tension et/ou sur le moule raccordé à un deuxième potentiel de tension.

12. Dispositif selon la revendication 11, **caractérisé par** un outil de retenue (22) pour la retenue du comprimé de poudre (2) revêtu de l'agent de démoulage (12) ou de l'aimant brut (5) revêtu de l'agent de démoulage (12) en vue de son déplacement qui présente une plaque de retenue (23) ou qui se compose d'une plaque de retenue en matériau électriquement isolant.

13. Dispositif selon la revendication 12, **caractérisé en ce que** la plaque de retenue (23) se compose du même matériau que l'agent de démoulage (12), en particulier du nitrure de bore.

14. Dispositif selon la revendication 11 ou 12, **caractérisé en ce que** l'outil de retenue (22) est un élévateur magnétique destiné à la réception magnétique du comprimé de poudre (2) ou de l'aimant brut (5).

15. Dispositif selon la revendication 14, **caractérisé en ce que**, sur le côté de la plaque de retenue (23) éloigné du comprimé de poudre (2) ou de l'aimant brut (5) à recevoir, il est disposé des aimants permanents (24) dont la distance à la plaque de retenue (23) peut être modifiée.

16. Dispositif selon l'une des revendications 11 à 15, **caractérisé en ce que** le flacon pulvérisateur est une buse à jet plat.
